# EUROPEAN PATENT APPLICATION

(11) **EP 4 761 263 A1**
(43) Date of publication of application: **17.06.2026**
(21) Application number: 25221023.2
(22) Date of filing: 05.12.2025
(51) Int. Cl.: H04N 23/667, G06T 5/60, H04N 23/80

(54) **ADAPTIVE IMAGE ENHANCEMENT FOR IMPROVED DEVICE OPERATION**

(30) Priority: 12.12.2024 US 202418979188
(71) Applicant: Microsoft Technology Licensing, LLC, Redmond, WA 98052 (US)
(72) Inventor: BURTON, NICHOLAS DAVID, Redmond, Washington, 98052 (US); FIGUERA ALEGRE, MARIA ISABEL, Redmond, Washington, 98052 (US); GULDOGAN, ESIN, Redmond, Washington, 98052 (US); DSOUZA, VIVIAN, Redmond, Washington, 98052 (US)
(74) Representative: CMS Cameron McKenna Nabarro Olswang LLP

(57) **Abstract**

Examples are disclosed that relate to controlling a device to enhance a digital image by selectively using different digital image enhancement algorithms based on adaptive device operation criteria that improves overall performance of the device. In one example, a digital image (204) is received from a camera (202). Sensor data (210) indicating a set of sensor parameter values (212) is received from a sensor subsystem (206). The digital image (204) is processed with a hardware-based image enhancement algorithm (222) to generate a first processed digital image (204) having higher image quality than the digital image (204) based on the set of sensor parameter values (212) not meeting adaptive device operation criteria (236). The digital image (204) is processed with an artificial intelligence (AI)-based image enhancement algorithm (226) to generate a second processed digital image (228) having higher image quality than the first processed digital image (224) based on the set of sensor parameter values (212) meeting the adaptive device operation criteria (236).

## Description

### BACKGROUND

Image processing may be performed on digital images to improve the visual quality and interpretability of the digital images, often making them suitable for a particular purpose or enhancing the aesthetic appeal. Image processing encompasses various techniques used to analyze, modify, and optimize digital images. Image processing can include basic operations such as filtering, resizing, and color correction, as well as more complex transformations, such as feature extraction, object detection, and image segmentation. These techniques are integral to preparing images for interpretation or analysis by both human observers and machine learning models. Further, image enhancement techniques range from simple contrast adjustments to sophisticated methods that enhance image details, correct imperfections, and reduce noise. Traditional image enhancement relies on techniques like histogram equalization, edge enhancement, and noise reduction filters to improve image quality and reveal important features.

### SUMMARY

Examples are disclosed that relate to controlling a device to enhance a digital image by selectively using different digital image enhancement algorithms based on adaptive device operation criteria that improves overall performance of the device. In one example, a raw digital image is received from a camera of a device. Sensor data indicating a set of sensor parameter values is received from a sensor subsystem of the device. The sensor subsystem includes one or more environmental sensors configured to output one or more environmental parameter values and one or more device sensors configured to output one or more device operating parameter values. The set of sensor parameter values includes the one or more environmental parameter values and the one or more device operating parameter values. The raw digital image is processed with a hardware-based image enhancement algorithm executed by an image signal processing (ISP) hardware pipeline of the device to generate a first processed digital image based at least on the set of sensor parameter values not meeting the adaptive device operation criteria. The first processed digital image has higher image quality than the raw digital image. The raw digital image is processed with an AI-based image enhancement algorithm executed by a neural processing unit (NPU) of the device to generate a second processed digital image based at least on the set of sensor parameter values meeting adaptive device operation criteria. The second processed digital image has higher image quality than the first processed digital image.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

FIGS. 1A-1C show example devices having cameras that are configured to output raw digital images that can be enhanced according to the adaptive digital image enhancement techniques of the present disclosure.
FIG. 2 schematically shows an example device that is configured to perform the adaptive digital image enhancement techniques of the present disclosure.
FIG. 3 schematically shows a sensor subsystem of the device shown in FIG. 2 as well as adaptive device operation criteria used to perform the adaptive digital image enhancement techniques of the present disclosure.
FIGS. 4-7 show example methods for controlling a device to perform the adaptive digital image enhancement techniques of the present disclosure.
FIG. 8 shows an example computing system.

### DETAILED DESCRIPTION

Image processing may be performed on digital images to enhance the visual quality and interpretability of the digital images, often making them suitable for a particular purpose or enhancing the aesthetic appeal. In some examples, image processing is performed using an image signal processing hardware pipeline. An image signal processing (ISP) hardware pipeline includes a specialized series of hardware stages that are configured to execute various image enhancement algorithms that perform different image signal processing operations on a raw digital image that is output from a camera to generate a refined / processed digital image or video that is suitable for display, storage, or further processing. In some examples, an ISP hardware pipeline can be configured to execute a hardware-based noise reduction algorithm that reduces noise in a digital image. A hardware-based noise reduction algorithm relies on deterministic rules to suppress random noise, often by smoothing or averaging pixel values based on local neighborhoods. Example hardware-based noise reduction algorithms that can be executed by an ISP hardware pipeline include, but are not limited to, Gaussian filtering, median filtering, and wavelet-based denoising algorithms.

More recently, artificial intelligence (AI)-based noise reduction algorithms have been developed to reduce noise in a digital image. AI-based noise reduction algorithms (e.g., neural networks) are trained on large datasets of noisy and clean digital images in order to recognize and differentiate between noise and actual image content. Such training enables the AI-based noise reduction algorithms to make more context-aware decisions relative to a hardware-based noise reduction algorithm that is executed by the ISP hardware pipeline.

AI-based noise reduction algorithms have various advantages relative to hardware-based noise reduction algorithms, in some instances. As one example, hardware-based noise reduction algorithms often struggle to balance noise reduction with detail preservation. This is because smoothing techniques employed by the hardware-based noise reduction algorithms tend to reduce fine details along with noise, leading to a loss of sharpness, especially in high-noise images. AI-based noise reduction algorithms can be trained to understand complex textures and patterns, even in high-noise images. Such training allows for the AI-based noise reduction algorithms to distinguish between noise and actual image content, and selectively remove noise while retaining sharpness and fine details in the digital image.

As another example, hardware-based noise reduction algorithms often apply the same algorithm universally across all scenes in different digital images. AI-based noise reduction algorithms can adapt dynamically to different noise types (e.g., sensor noise, chroma noise, JPEG artifacts) and levels (e.g., low-light noise vs. daylight noise). Some AI-based noise reduction algorithms even include models trained for specific operating conditions, such as low-light images or images generated with high-ISO settings.

As yet another example, hardware-based noise reduction algorithms are generally limited to pixel neighborhoods and lack understanding of the broader scene context of a digital image. Hardware-based noise reduction algorithms typically apply rules consistently, regardless of the specific image content in the digital image. AI-based noise reduction algorithms can understand context within an image. For example, AI-based noise reduction algorithms can recognize that a textured wall should retain its grainy texture, while a sky area should appear smooth. This contextual understanding allows AI-based noise reduction algorithms to treat different areas of an image differently, generating a more natural look in a processed digital image.

However, AI-based noise reduction algorithms can have some disadvantages relative to hardware-based noise reduction algorithms, in some instances. As one example, hardware-based noise reduction algorithms are computationally efficient and optimized for real-time performance on embedded hardware (e.g., an ISP hardware pipeline). Hardware-based noise reduction algorithms do not require extensive processing power, making them suitable for devices with limited resources. AI-based noise reduction algorithms require more computational power to process a digital image relative to hardware-based noise reduction algorithms. Additionally, AI-based noise reduction algorithms may be executed using dedicated / specialized hardware, such as a neural processing unit (NPU), that is separate from an ISP hardware pipeline.

Accordingly, examples are disclosed that relate to controlling a device using a hybrid approach that selectively uses either hardware-based noise reduction or AI-based noise reduction to enhance a digital image based on adaptive device operation criteria. The adaptive device operation criteria take into consideration environmental data and sensor data of the device to determine which noise reduction algorithm should be used in order to deliver the best overall performance for the current operating conditions of the device.

In one example, a raw digital image is received from a camera of a device. As used herein, the term "raw digital image" means an image that is generated without any enhancement and may include monochrome images, color images, and images that have been at least partially processed (e.g., applying a Bayer filter). Sensor data indicating a set of sensor parameter values is received from a sensor subsystem of the device. The sensor subsystem includes one or more environmental sensors configured to output one or more environmental parameter values and one or more device sensors configured to output one or more device operating parameter values. The set of sensor parameter values includes the one or more environmental parameter values and the one or more device operating parameter values. The raw digital image is processed with a hardware-based image enhancement algorithm executed by an ISP hardware pipeline of the device to generate a first processed digital image based at least on the set of sensor parameter values not meeting the adaptive device operation criteria. The first processed digital image has higher image quality than the raw digital image. The raw digital image is processed with an AI-based image enhancement algorithm executed by an NPU of the device to generate a second processed digital image based at least on the set of sensor parameter values meeting the adaptive device operation criteria. The second processed digital image has higher image quality than the first processed digital image.

In one example, the AI-based image enhancement algorithm is an AI-based noise reduction algorithm, and the hardware-based image enhancement algorithm is a hardware-based noise reduction algorithm. In other examples, the device is configured to intelligently switch between other corresponding AI-based and hardware-based image enhancement algorithms that are used to analyze, modify, and/or improve the image quality of a raw digital image. The techniques discussed herein are broadly applicable to intelligently selecting between numerous different types of AI-based and hardware-based image enhancement algorithms.

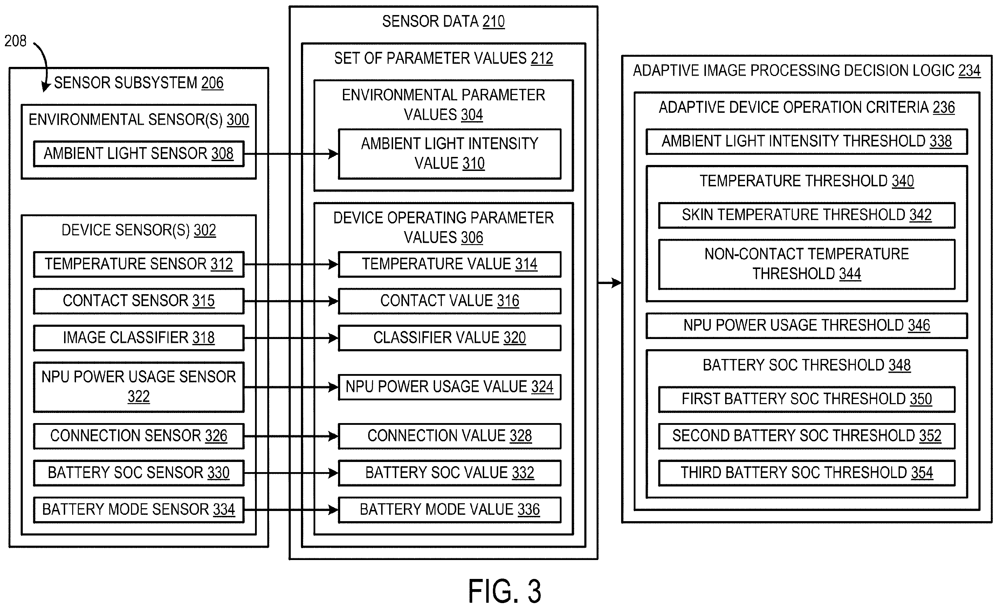

By intelligently selecting either the AI-based image enhancement algorithm or the hardware-based image enhancement algorithm to process the raw digital image based on the adaptive device operation criteria, the device is controlled in a manner that provides the best overall performance for the device for the given operating conditions. In particular, under certain operating conditions, the image quality of the processed image, and the memory and power consumption of the device are directly impacted to improve the overall performance of the device based on the particular algorithm that is selected to process the raw digital image. In this way, the overall performance of the device is increased relative to a device that employs a naive approach for processing raw digital images; e.g., a device that only uses hardware-based image enhancement or AI-based image enhancement under all operating conditions. More particularly, the operating conditions of the device can be accurately and granularly characterized collectively by the environmental parameter value(s) and the device operating parameters value(s). The environmental parameter value(s) can be used to determine whether or not environmental conditions are suitable to use the AI-based image enhancement algorithm. By avoiding using the AI-based algorithm when environmental conditions are not suitable as specified by the adaptive device operation criteria (e.g., ambient lighting conditions are too bright for the AI-based noise reduction algorithm to improve image quality), the power consumption and memory usage of the device can be reduced. The device operating parameters value(s) can be used to determine whether or not operating conditions of the device are suitable to user the AI-based image enhancement algorithm. By avoiding using the AI-based algorithm when operating conditions of the device are not suitable as specified by the adaptive device operation criteria (e.g., battery state of charge is low), the overall performance of the device can be optimized for the current operating conditions of the device. Additional technical benefits provided by the adaptive digital image enhancement techniques of the present disclosure with be discussed in further detail below with reference to FIG. 3.

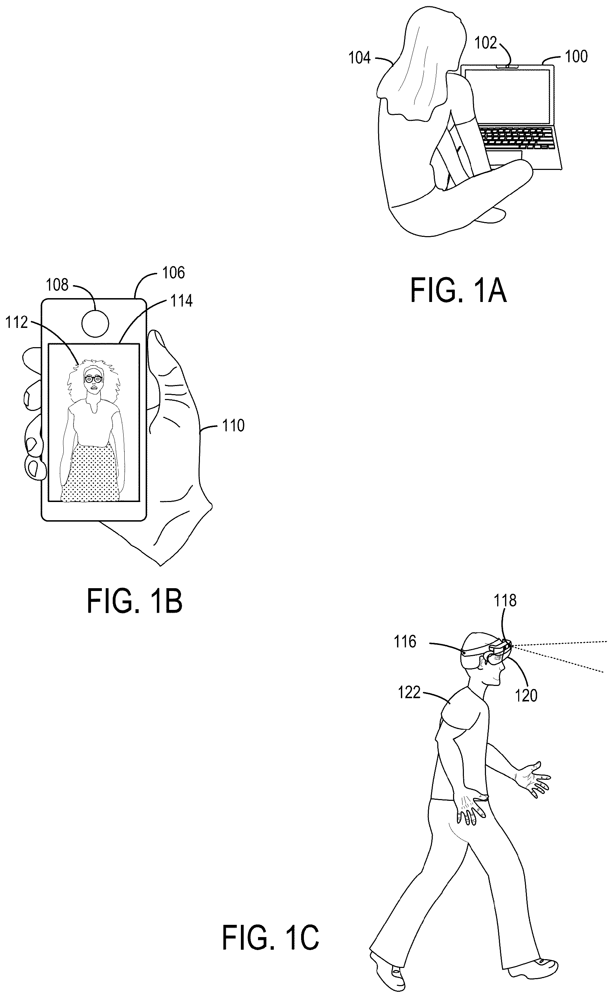

FIGS. 1A-1C show example devices having cameras that are configured to output raw digital images that can be enhanced according to the adaptive digital image enhancement techniques of the present disclosure. FIG. 1A shows an example device in the form of a laptop computer 100. The laptop computer 100 includes a camera 102. The camera 102 is positioned on the laptop computer 100 to capture images of a user 104. For example, the laptop computer 100 may be configured to execute a video-presentation application program where the camera 102 captures raw digital images / video of the user 104 while the user is providing commentary for a slide deck presentation. The laptop computer 100 is configured to enhance the raw digital images / video captured by the camera 102 according to the adaptive digital image enhancement techniques of the present disclosure to generate processed digital images / video that have a higher image quality than the raw digital images / video. Further, the video-presentation application program executed by the laptop computer 100 is configured to embed the processed digital images / video in a presentation file that can be presented on the laptop computer 100 or sent to a computer of a remote user that desires to view the presentation. Note that the processed digital images generated according to the adaptive digital image enhancement techniques of the present disclosure can be used by any suitable application program executed by the laptop computer 100.

FIG. 1B shows another example device in the form of a smartphone 106. The smartphone 106 includes a camera 108. The camera 108 is positioned on a display side of the smartphone 106 to capture raw digital images/ video of the user 110. For example, the smartphone 106 may be configured to execute a video-call application program where the camera 108 captures raw digital images / video of the user 110 while the user 110 is talking to a remote user 112. The smartphone 106 is configured to enhance the raw digital images / video captured by the camera 108 according to the adaptive digital image enhancement techniques of the present disclosure to generate processed digital images / video that have a higher image quality than the raw digital images / video. Further, the smartphone 106 is configured to send the processed digital images / video to a smartphone / computer of a remote user that is interacting with the user 104 via the video-call application program. Likewise, the smartphone 106 is configured to receive digital images / video from the smartphone / computer of the remote user 112 and visually present the digital images / video of the remote user 112 on a display 114 of the smartphone 106. Note that the processed digital images generated according to the adaptive digital image enhancement techniques of the present disclosure can be used by any suitable application program executed by the smartphone 106.

FIG. 1C shows yet another example device in the form of a head-mounted device (HMD) 116. The HMD 116 includes an outward-facing camera 118 and a display 120. The HMD 116 is worn by a user 122. The camera 118 is positioned on the HMD 116 to capture raw digital images / video of the real-world environment as the user 122 moves throughout the real-world environment. The HMD 116 is configured to enhance the raw digital images / video captured by the camera 118 according to the adaptive digital image enhancement techniques of the present disclosure to generate processed digital images / video that have a higher image quality than the raw digital images / video. Further, the HMD 116 is configured to generate augmented-reality images by incorporating virtual content into the processed digital images / video and visually present the augmented-reality images on the display 120. Note that the processed digital images generated according to the adaptive digital image enhancement techniques of the present disclosure can be used by any suitable application program executed by the HMD 116.

The laptop computer 100, the smartphone 106, and the HMD 116 are provided as non-limiting examples of devices that are configured to apply the adaptive digital image enhancement techniques of the present disclosure to generate processed digital images / video that have a higher image quality than raw digital images / video. More particularly, the devices are configured to intelligently switch between an AI-based image enhancement algorithm and a hardware-based image enhancement algorithm to process raw digital images / video based on adaptive device operation criteria. The adaptive device operation criteria are used to determine which algorithm provides the best device performance for the current operating conditions, such that the image quality, and the memory and power consumption of the device is directly impacted to improve the overall performance of the device relative to a naive approach that uses only the hardware-based image enhancement algorithm or the AI-based image enhancement algorithm under all operating conditions. The adaptive digital image enhancement techniques disclosed herein are broadly applicable to any suitable device that has a camera that captures digital images that are processed to improve the visual quality and/or interpretability of the digital images, often making them suitable for a particular purpose or enhancing the aesthetic appeal.

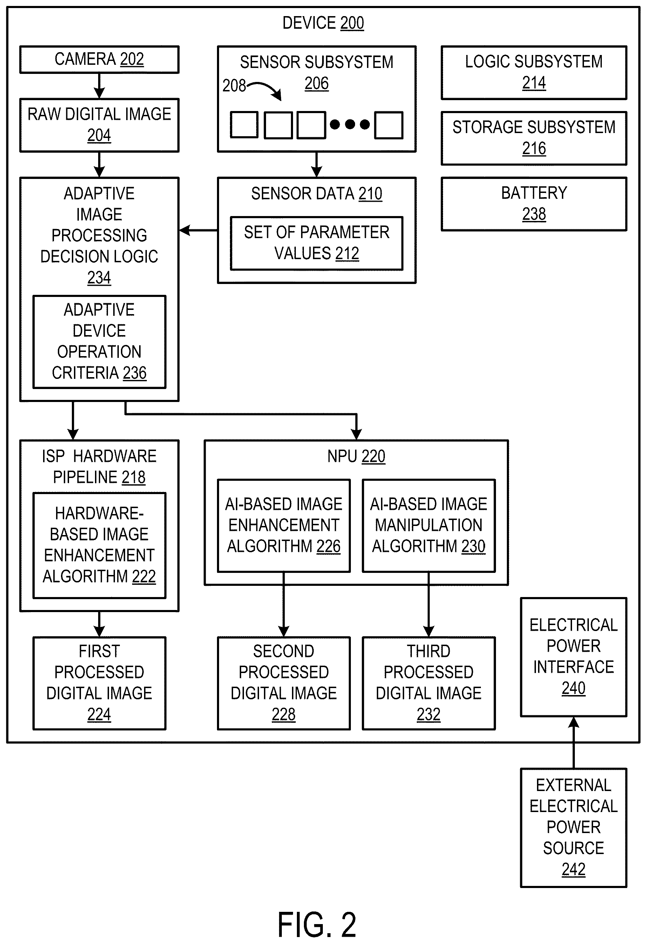

FIG. 2 schematically shows an example device 200 that is configured to perform the adaptive digital image enhancement techniques of the present disclosure. For example, the device 200 may be representative of the laptop computer 100 shown in FIG. 1A, the smartphone 106 shown in FIG. 1B, the HMD 116 shown in FIG. 1C, or another suitable device.

The device 200 includes a camera 202 that is configured to output a raw digital image 204. The camera 202 may take any suitable form including a monochrome camera, an RGB camera, a depth camera, an infrared camera, a hyperspectral camera, or another form of camera.

The device 200 includes a sensor subsystem 206 including a plurality of sensors 208 configured to output sensor data 210 indicating a set of sensor parameter values 212. The plurality of sensors 208 and the sensor data 210 output by the plurality of sensors 208 will discussed in further detail with references to FIG. 3.

The device 200 includes a logic subsystem 214 and a data storage subsystem 216 holding instructions that are executable by the logic subsystem 214 to perform computing operations to control operation of the device 200. More particularly, the logic subsystem 214 includes an ISP hardware pipeline 218 and an NPU 220 that is separate from the ISP hardware pipeline 218.

The ISP hardware pipeline 218 includes a specialized series of hardware stages that are configured to execute a hardware-based image enhancement algorithm 222 that performs image signal processing operations on the raw digital image 204 to generate a first processed digital image 224. The image signal processing operations performed by the hardware-based image enhancement algorithm 222 cause the first processed digital image 224 to have higher image quality than the raw digital image 204. In one example, the hardware-based image enhancement algorithm 222 is a hardware-based noise reduction algorithm that causes the first processed digital image 224 to have reduced image noise relative to the raw digital image 204. In other examples, the hardware-based image enhancement algorithm 222 is a different hardware-based image enhancement algorithm that performs other image signal processing operations to increase the image quality of the first processed digital image 224 relative to the raw digital image 204. Further, in some examples, the ISP hardware pipeline 218 is configured to execute one or more additional hardware-based image enhancement algorithms besides the hardware-based image enhancement algorithm 222. Example image enhancement algorithms that can be executed by different stages of the ISP hardware pipeline 218 can include, but are not limited to, black level correction, lens shading correction, de-mosaicing, white balance, color correction, gamma correction, tone mapping and high dynamic range (HDR) processing, and edge enhancement.

The NPU 220 is a specialized processor designed to accelerate the computation of machine learning (ML) and artificial intelligence (AI) tasks, particularly those involving deep learning. More particularly, the NPU 220 is configured to handle specific operations that neural networks require, such as matrix multiplications, convolutions, and non-linear activations, far more efficiently than a traditional CPU or GPU. Moreover, the NPU 220 is more power-efficient than a CPU or GPU, because the NPU 220 does not need to handle other general-purpose processing. However, the NPU 220 is less power-efficient than the ISP hardware pipeline 218, in some instances.

The NPU 220 is configured to execute an AI-based image enhancement algorithm 226 that performs image signal processing operations on the raw digital image 204 to generate a second processed digital image 228. The image signal processing operations performed by the AI-based image enhancement algorithm 226 cause the second processed digital image 228 to have higher image quality than the raw digital image 204 as well as the first processed digital image 224. This is because the AI-based image enhancement algorithm 226 is able to make more context-aware decisions that increase the accuracy and detail preservation of image enhancement relative to the corresponding hardware-based image enhancement algorithm 222 that is executed by the ISP hardware pipeline 218, as discussed above.

In one example, the AI-based image enhancement algorithm 226 is an AI-based noise reduction algorithm that causes the second processed digital image 228 to have reduced image noise relative to the raw digital image 204. In other examples, the AI-based image enhancement algorithm 226 is a different AI-based image enhancement algorithm that performs other image signal processing operations to increase the image quality of the second processed digital image 228 relative to the raw digital image 204 as well as relative to the first processed digital image 224.

Further, in some examples, the NPU 220 is configured to execute one or more additional AI-based algorithms. In one example, the NPU 220 is configured to execute an AI-based image manipulation algorithm 230 that processes the raw digital image 204 to generate a third processed digital image 232. The AI-based image manipulation algorithm 230 may perform AI- based image signal processing techniques, such as AI-driven retouching, background removal, object manipulation, upscaling, color correction, resolution enhancement, style transfer (e.g., turning photos into paintings or applying specific art styles), digital watermarking, fingerprinting, and traceability techniques that protect intellectual property rights using hidden or detectable marks in digital images.

Under some operating conditions, the AI-based image enhancement algorithm 226 and the AI-based image manipulation algorithm 230 can be computationally intensive, such that the NPU 220 has to balance execution of computing operations between the different algorithms. For example, execution of the AI-based image enhancement algorithm 226 by the NPU 220 may consume a level of computational resources of the NPU 220 that does not leave enough computational resources available to execute the AI-based image manipulation algorithm 230 fully in parallel. As such, in this example, the NPU 220 may have to finish performing the image signal processing operations of the AI-based image enhancement algorithm 226 before preforming the image signal processing operations of the AI-based image manipulation algorithm 230. In other examples, the NPU 220 may employ a time-multiplexing scheme to distribute available computational resources between the AI-based image enhancement algorithm 226 and the AI-based image manipulation algorithm 230. In some examples, the device 200 may control operation of the NPU 220 based at least on additional adaptive device operation criteria as will be discussed in further detail herein.

The storage subsystem 216 holds instructions executable by the logic subsystem 214 to execute adaptive image processing decision logic 234 that is configured to make a decision about which of the AI-based image enhancement algorithm 226 or the hardware-based image enhancement algorithm 222 to use to process the raw digital image 204. The adaptive image processing decision logic 234 makes the decision based at least on adaptive device operation criteria 236 that characterize the current environmental conditions and the current operating conditions of the device 200.

In one example, the adaptive image processing decision logic 234 is configured to receive the raw digital image 204 from the camera. The adaptive image processing decision logic 234 is configured to receive the sensor data 210 from the sensor subsystem 206. The sensor data 210 indicates the set of sensor parameter values 212 that characterize the current environmental conditions and the current operating conditions of the device 200. The adaptive image processing decision logic 234 is configured to select which image enhancement algorithm to select to process the raw digital image 204 based at least on determining whether the set of sensor parameter values 212 meet the adaptive device operation criteria 236.

The adaptive image processing decision logic 234 is configured to process the raw digital image 204 with the hardware-based image enhancement algorithm 222 executed by the ISP hardware pipeline 218 to generate the first processed digital image 224 based at least on the set of sensor parameter values 212 not meeting the adaptive device operation criteria 236. As will be discussed in further detail with reference to FIG. 3, the adaptive image processing decision logic 234 in this instance determines that the overall performance of the device 200 will be higher by processing the raw digital image 204 with the hardware-based image enhancement algorithm 222 based on the current environmental conditions and the current operating conditions of the device 200 as characterized by the set of sensor parameter values 212 when the adaptive device operation criteria 236 is not met.

On the other hand, the adaptive image processing decision logic 234 is configured to process the raw digital image 204 with the AI-based image enhancement algorithm 226 executed by the NPU 220 to generate the second processed digital image 228 based at least on the set of sensor parameter values 212 meeting adaptive device operation criteria 236. As will be discussed in further detail with reference to FIG. 3, the adaptive image processing decision logic 234 in this instance determines that the overall performance of the device 200 will be higher by processing the raw digital image 204 with the AI-based image enhancement algorithm 226 based on the current environmental conditions and the current operating conditions of the device 200 as characterized by the set of sensor parameter values 212 when the adaptive device operation criteria 236 is met.

FIG. 3 schematically shows the sensor subsystem 206 of the device 200 shown in FIG. 2 as well as adaptive device operation criteria 236 used to perform the adaptive digital image enhancement techniques of the present disclosure. The sensor subsystem 206 includes a plurality of sensors 208 configured to output a set of sensor parameter values 212. The plurality of sensors 208 includes one or more environmental sensors 300 and one or more device sensors 302. The environmental sensor(s) 300 are configured to output one or more environmental parameter values 304 that characterize current environmental conditions. The device sensor(s) 302 are configured to output one or more device operating parameter values 306 that characterize current operating conditions of the device 200. The set of sensor parameter values 212 includes the one or more environmental parameter values 304 and the one or more device operating parameter values 306.

In some examples, the environmental sensor(s) 300 include an ambient light sensor 308 that is configured to output an ambient light intensity value 310 that characterizes a brightness of ambient light in the environment where the device 200 operates. In other examples, the environmental sensor(s) 300 may include additional environmental sensors that characterize other aspects of the environment that can affect performance of the device 200, such as an ambient temperature sensor, a sensor that determines geographic location of the device 200, an altitude sensor, and/or a sensor that determines weather conditions.

In some examples, the device sensor(s) 302 include a temperature sensor 312 that is configured to output a temperature value 314 of the device 200. In some examples, the temperature sensor 312 is configured to measure a chassis temperature of a chassis of the device 200 that can come in contact with a user of the device 200. In other examples, the temperature sensor 312 is configured to measure a temperature of another component of the device 200.

In some examples where the device 200 can be held or worn by a user, the device sensor(s) 302 include a contact sensor 315 that is configured to output a contact value 316. The contact value 316 indicates whether the device 200 is in contact with a user. In one example, the contact sensor 315 is a capacitive touch sensor that indicates when the user comes in contact with the device 200. For example, the capacitive touch sensor may be integrated into a chassis of the device 200.

In some examples, the device sensor(s) 302 include an image classifier 318 that is configured to perform image analysis on the raw digital image 204 to determine the whether the device 200 is in contact with a user. The image classifier 318 is configured to output a classifier value 320 based on performing image analysis on the raw digital image 204. The classifier value 320 indicates whether or not the device 200 is in contact with a user. In one example, the image classifier 318 is a machine learning model (e.g., a neural network) that is trained based on images of different people holding different devices as well as images of people not holding the different devices. In some examples, the contact value 316 output by the contact sensor 315 and the classifier value 320 output by the image classifier 318 may be considered together to determine whether the device is being held by a user.

In some implementations, the device 200 includes a battery 238 (shown in FIG. 2) that is configured to provide electrical power to the device 200. Further, as shown in FIG. 2, the device 200 includes an electrical power interface 240 that is configured to electrically connect the device 200 to an external electrical power source 242 that is configured to provide electrical power to the device 200 (and/or electrical power to charge the battery 238).

In implementations where the device 200 includes the battery 238 and the electrical power interface 240, as shown in FIG. 3, the device sensor(s) 302 include a connection sensor 326 that is configured to output a connection value 328. The connection value 328 indicates whether the device 200 is connected to the external electrical power source 242 via the electrical power interface 240. Further, the device sensor(s) 302 include a battery state of charge (SOC) sensor 330 that is configured to output a battery SOC value 332 that indicates a level / state of charge of the battery 238.

In some implementations where the device includes the battery 238, the device 200 is configured to operate in different electrical power consumption modes including a performance mode, a balance mode, and a battery saver mode. The different operating modes can be employed to prioritize different performance benefits of the device depending on the operating conditions of the device and/or user preferences.

In the performance mode, the device 200 prioritizes computational performance over battery power preservation / reduced power consumption. In the performance mode, the device 200 has higher thresholds for memory / processor usage and lower thresholds for battery state of charge that allow for the device 200 to perform higher performance processing even if the battery state of charge is relatively low.

In the balance mode, the device 200 balances computational performance with battery power preservation / reduced consumption. In the balanced mode, the device 200 has lower thresholds for memory / processor usage and higher thresholds for battery state of charge relative to the performance mode. In the balanced mode, the device 200 may not perform high performance processing as much as in the performance mode while preserving battery state of charge to a higher degree than in the performance mode.

In the battery saver mode, the device 200 prioritizes battery power preservation / reduced consumption over computational performance. In the battery saver mode, the device 200 has lower thresholds for memory / processor usage and higher thresholds for battery state of charge relative to the balance mode that allow for the device 200 to preserve battery state of charge in favor of performing higher performance processing.

The different electrical power consumption modes allow for the device 200 to adapt operation to the current operating conditions of the device and/or the preferences of user relative to a device that does not operate in different operating modes. In implementations where the device 200 is configured to operate in different electrical power consumption modes, the device sensor(s) 302 include a battery mode sensor 334 that is configured to output a battery mode value 336. The battery mode value 336 indicates in which electrical power consumption mode the device 200 is currently operating.

Continuing with FIG. 3, the adaptive image processing decision logic 234 is configured to receive the sensor data 210 indicating the set of sensor parameter values 212 and apply the adaptive device operation criteria 236 to the set of sensor parameter values 212 to determine whether to use the hardware-based image enhancement algorithm 222 or the AI-based image enhancement algorithm 226 to process the raw digital image 204. The adaptive device operation criteria 236 provides a mechanism for optimizing overall performance of the device 200 for the current environmental conditions and the current operating conditions of the device 200.

The adaptive device operation criteria 236 includes an ambient light intensity threshold 338. The ambient light intensity threshold 338 can be selected to differentiate between bright ambient light conditions and low ambient light conditions in which the camera 202 captures the raw digital image 204. In one example, the ambient light intensity threshold 338 is set to a light intensity value that is in a range of 100-200 lumens. In other examples, the ambient light intensity threshold 338 is set to another suitable light intensity value.

In low ambient light conditions where the ambient light intensity value 310 is less than the ambient light intensity threshold 338, the AI-based image enhancement algorithm 226 can often enhance the raw digital image 204 to a greater degree relative to the hardware-based image enhancement algorithm 222. In bright ambient light conditions where the ambient light intensity value 310 is greater than the ambient light intensity threshold 338, the AI-based image enhancement algorithm 226 can have a same or similar level of effectiveness of enhancing the raw digital image 204 as the hardware-based image enhancement algorithm 222 while consuming more computational resources and electrical power to process the raw digital image 204 relative to the hardware-based image enhancement algorithm 222. Thus, using the AI-based image enhancement algorithm 226 in bright ambient light conditions does not typically improve the overall performance of the device 200 relative to using the hardware-based image enhancement algorithm 226. By avoiding using the AI-based image enhancement algorithm in bright ambient light conditions, power consumption of the device 200 can be reduced relative to a device that always uses an AI-based image enhancement algorithm regardless of ambient light conditions. Therefore, the adaptive image processing decision logic 234 can be configured to determine that the adaptive device operation criteria 236 are not met based at least on the ambient light intensity value 310 being greater than the ambient light intensity threshold 338, and thereby select hardware-based image enhancement.

The adaptive device operation criteria 236 include a temperature threshold 340. In some examples, the temperature threshold 340 can be set to a temperature that prevents the device 200 from overheating and causing components of the device 200 to function improperly. Using the AI-based image enhancement algorithm 226 consumes more electrical power and can cause the temperature of the device 200 to increase to a greater degree than when using the hardware-based image enhancement algorithm 222. Thus, using the AI-based image enhancement algorithm 226 when the temperature value 314 is greater than the temperature threshold 340 does not improve the overall performance of the device 200 relative to using the hardware-based image enhancement algorithm 226. Therefore, the adaptive image processing decision logic 234 is configured to determine that the adaptive device operation criteria 236 are not met based at least on the temperature value 314 being greater than the temperature threshold 340, and thereby select hardware-based image enhancement.

In some implementations where the device 200 includes a chassis that can be held by a user or otherwise can come in contact with the skin of a user, the adaptive device operation criteria 236 includes a skin temperature threshold 342. The skin temperature threshold 342 can be set to a temperature that causes discomfort to the skin of the user that comes in contact with the device 200. Further, in some examples, the adaptive device operation criteria 236 includes a non-contact temperature threshold 344 that is greater than the skin temperature threshold 342. The non-contact temperature threshold 344 can be set to a temperature that is high enough where the device 200 may be uncomfortable when contacting a user but is low enough so as not to cause damage to a surface of an object on which the device 200 is positioned (e.g., a table, desk, or countertop). Employing the non-contact temperature threshold 344 that is greater than the skin temperature threshold 342 allows for the device 200 to perform more intensive processing operations for increased image enhancement even though such processing operations can consume more power and cause the temperature of the device 200 to increase above the skin temperature threshold 342.

In such examples, the adaptive image processing decision logic 234 is configured to determine whether the device 200 is in contact with a user. The adaptive image processing decision logic 234 may be configured to perform image analysis on the raw digital image 204 with the image classifier 318 to produce the classifier value 320 that indicates whether the device 200 is in contact with the user. Alternatively or additionally, the adaptive image processing decision logic 234 may be configured to determine whether the device 200 is in contact with the user based at least on the contact value 316 output by the contact sensor 315 that indicates whether the user is in contact with the device 200.

In one example, the adaptive image processing decision logic 234 is configured to determine that the adaptive device operation criteria 236 are not met based at least on the device 200 being in contact with the user and the temperature value 314 of the device being greater than the skin temperature threshold 342, and thereby select hardware-based image enhancement. Further, in another example, the adaptive image processing decision logic 234 is configured to determine that the adaptive device operation criteria 236 are not met based at least on the device 200 being not in contact with the user and the temperature value 314 of the device 200 being greater than the non-contact temperature threshold 344, and thereby select hardware-based image enhancement.

By specifying different temperature thresholds in the adaptive device operation criteria 236, the adaptive device operation criteria 236 covers the different scenarios where the device 200 is being held by a user or is placed on a surface of an object. Further, the adaptive image processing decision logic 234 is configured to adaptively adjust the operating parameters of the device 200 according to the specific scenario in order for the device 200 to produce the best overall performance for the specific scenario. In the examples described above, the operating parameters of the device 200 are adaptively adjusted to balance computational performance versus comfort based on the specific scenario of the device 200 being held or placed on a surface. In other examples, the operating parameters of the device 200 can be adaptively adjusted to prioritize other performance parameters of the device 200.

The adaptive device operation criteria 236 include a NPU power usage threshold 346. The NPU power usage threshold 346 can be set to balance usage of the AI-based image enhancement algorithm 226 to process the raw digital image 204 with usage of other AI-based algorithms, such as the AI-based image manipulation algorithm 230 or more generally other AI-based algorithms (e.g., used for natural language processing, image classification, and other AI-based computing operations). In one example, the NPU power usage threshold 346 is set to 50% usage. In another example, the NPU power usage threshold 346 is set to 75%. The adaptive image processing decision logic 234 is configured to determine that the adaptive device operation criteria 236 are not met based at least on the NPU power usage value 324 being greater than the NPU power usage threshold 346, and thereby select hardware-based image enhancement.

By specifying the NPU power usage threshold 346 in the adaptive device operation criteria 236, the adaptive image processing decision logic 234 is able to decide to use the AI-based image enhancement algorithm 226 to process the raw digital image 204 in scenarios where its usage does not negatively impact performance of other AI-based algorithms that share usage of the NPU 220. In this way, overall performance of the device 200 can be improved relative to a device that always uses an AI-based image enhancement algorithm to process a raw digital image regardless of operating conditions of the device.

In some implementations, the raw digital image 204 is processed with the AI-based image manipulation algorithm 230 executed by the NPU 220 to generate the third processed digital image 232. In some examples, the AI-based image manipulation algorithm 230 is configured to incorporate a digital watermark in the third processed digital image 232. In other examples, the AI-based image manipulation algorithm 230 is configured to apply a style transfer to the raw digital image 204 to generate the third processed digital image 232. In yet other examples, the AI-based image manipulation algorithm 230 is configured to perform a different type of image manipulation.

The AI-based image manipulation algorithm 230 may manipulate the raw digital image 204 in a manner that would make the AI-based image enhancement algorithm 226 less effective or ineffective were it to be used to further process the third processed digital image 232 due to the significant amount of changes in appearance between the raw digital image 204 and the third processed digital image 232. In the example where the AI-based image enhancement algorithm 226 is an AI-based noise reduction algorithm, these types of manipulations would make the AI-based noise reduction algorithm less effective or ineffective were it to be used to further process the third processed digital image 232.

The adaptive image processing decision logic 234 is configured to determine that the raw digital image 204 is processed with the AI-based image manipulation algorithm 230 executed by the NPU 220 to generate the third processed digital image 232. Further, the adaptive image processing decision logic 234 is configured to not use the AI-based image enhancement algorithm to process the raw digital image 204 based at least on the raw digital image 204 being processed with the AI-based image manipulation algorithm 230 to generate the third processed digital image 232. By avoiding using the AI-based image enhancement algorithm 226 in scenarios where the AI-based image manipulation algorithm 230 is used to process the raw digital image 204 to generate the third processed digital image 232, overall power consumption of the device 200 is reduced relative to a device that always processes a raw digital image using an AI-based image enhancement algorithm regardless of operating conditions of the device. Moreover, by avoiding using the AI-based image enhancement algorithm 226 in such scenarios, the NPU 220 is made available to execute other AI-based algorithms as desired for the device 200 to provide improved overall performance.

In implementations where the device 200 includes the battery 238 and the electrical power interface 240, the adaptive image processing decision logic 234 is configured to determine that the adaptive device operation criteria 236 are not met based at least on the connection value 328 that is output by the connection sensor 326 indicating that the device 200 is not electrically connected to the external electrical power source 242 via the electrical power interface 240, and the battery SOC value 332 output by the battery mode sensor 334 being less than a battery SOC threshold 348, and thereby select hardware-based image enhancement. In this example, the adaptive device operation criteria 236 covers a scenario where the device 200 is not electrically connected to an external power source to receive electrical power, and the battery SOC is relatively low. In order to conserve battery power in this scenario, the adaptive image processing decision logic 234 decides to not use the AI-based image enhancement algorithm 226, because it consumes more electrical power than the hardware-based image enhancement algorithm 222. In this way, the overall performance of the device 200 is improved in this scenario relative to a device that always uses an AI-based image enhancement algorithm across all operating conditions of the device.

In implementations, where the device 200 is configured to operate in different electrical power consumption modes including the performance mode, the balance mode, and the battery saver mode, the adaptive image processing decision logic 234 is configured to determine that the adaptive device operation criteria 236 are not met based at least on the device 200 operating in the performance mode as indicated by the battery mode value 336 output by the battery mode sensor 334 and the battery SOC value 332 being less than the first battery SOC threshold 350, and thereby select hardware-based image enhancement. In this example, the adaptive device operation criteria 236 covers a scenario where the device 200 prioritizes computational performance over preserving battery SOC, and the battery 238 does not have a suitable SOC to support using the AI-based image enhancement algorithm 226.

Further, the adaptive image processing decision logic 234 is configured to determine that the adaptive device operation criteria 236 are not met based at least on the device 200 operating in the balance mode, and the battery SOC value 336 being less than the second battery SOC threshold 352, and thereby select hardware-based image enhancement. In this example, the adaptive device operation criteria 236 covers a scenario where the device 200 balances computational performance with preserving battery power. As such, the higher second battery SOC threshold 352 is used instead of the lower first battery SOC threshold 350. But the battery 238 still does not have a SOC that is greater than the second battery SOC threshold 352 in order to support using the AI-based image enhancement algorithm 226. Thus, the adaptive device operation criteria 236 are not met, and hardware-based image enhancement is thereby selected.

Further still, the adaptive image processing decision logic 234 is configured to determine that the adaptive device operation criteria 236 are not met based at least on the device 200 operating in the battery saver mode and the battery SOC value 332 being less than the third battery SOC threshold 354, and thereby select hardware-based image enhancement. In this example, the adaptive device operation criteria 236 covers a scenario where the device 200 prioritizes preserving battery power over computational performance. As such, the higher third battery SOC threshold 354 is used instead of the lower second battery SOC threshold 352. But the battery 238 still does not have a SOC that is greater than the third battery SOC threshold 354 in order to support using the AI-based image enhancement algorithm 226. Thus, the adaptive device operation criteria 236 are not met, and hardware-based image enhancement is thereby selected.

In some implementations, the adaptive image processing decision logic 234 is configured to determine that the adaptive device operation criteria 236 are met based at least on the ambient light intensity value 310 being less than the ambient light intensity threshold 338, the temperature value 314 being less than the temperature threshold 340, the NPU power usage value 324 being less than the NPU power usage threshold 346, and the battery SOC value 332 being greater than the battery SOC threshold 348, and thereby select AI-based image enhancement.

In implementations where the device 200 includes a chassis that can be held by a user or otherwise can come in contact with the skin of a user, the adaptive device operation criteria 236 are met based at least on the above conditions as well as the contact value 316 and/or the classifier value 320 indicating that the device 200 is in contact with a user and the temperature value 314 being less than the skin temperature threshold 342, and AI-based image enhancement is thereby selected. Further, the adaptive device operation criteria 236 are met based at least on the above conditions as well as the contact value 316 and/or the classifier value 320 indicating that the device 200 is not in contact with a user and the temperature value 314 being less than the non-contact temperature threshold 344, and AI-based image enhancement is thereby selected.

In some implementations, the adaptive device operation criteria 236 are met based at least on the above conditions as well as the AI-based manipulation algorithm 230 not be used to process the raw digital image 204 and the NPU power usage value 324 being less than the NPU power usage threshold 346, and AI-based image enhancement is thereby selected.

In implementations where the device 200 includes the electrical power interface, the adaptive device operation criteria 236 are met based at least on the above conditions as well as the connection value 328 indicating that the device 200 is electrically connected to the external electrical power source 242 via the electrical power interface 240, and AI-based image enhancement is thereby selected.

In implementations where the device 200 is configured to operate in the different battery modes, the adaptive device operation criteria 236 are met based at least on the above conditions as well as the battery mode value 336 indicating that the device 200 is operating in performance mode and the battery SOC value 332 being greater than the first battery SOC threshold 350, and AI-based image enhancement is thereby selected. Further, the adaptive device operation criteria 236 are met based at least on the above conditions as well as the battery mode value 336 indicating that the device 200 is operating in the balance mode and the battery SOC value 332 being greater than the second battery SOC threshold 352, and AI-based image enhancement is thereby selected. Further still, the adaptive device operation criteria 236 are met based at least on the above conditions as well as the battery mode value 336 indicating that the device 200 is operating in the battery saver mode and the battery SOC value 332 being greater than the third battery SOC threshold 354, and AI-based image enhancement is thereby selected.

The adaptive device operation criteria 236 may include any suitable criteria that can be used to select either the AI-based image enhancement algorithm 226 or the hardware-based image enhancement algorithm 222 to process the raw digital image 204 based on the current environmental conditions and the current operating conditions of the device 200 in order to improve the overall performance of the device 200 relative to a device that is configured to only use an AI-based image enhancement algorithm to process a raw digital image under all environmental conditions and all operating conditions of the device.

Returning to FIG. 2, when generated, the first processed digital image 224, the second processed digital image 228, and the third processed digital image 232 may be output in any suitable form. In some examples, the first processed digital image 224, the second processed digital image 228, and the third processed digital image 232 may be output as data structures defining a matrix of pixels, each pixel including a value (e.g., color/brightness/depth). The first processed digital image 224, the second processed digital image 228, and the third processed digital image 232 may be to output to any suitable recipient internal or external to the device 200. In one example, the first processed digital image 224, the second processed digital image 228, and the third processed digital image 232 may be output to an additional processing component for additional image processing (e.g., filtering, computer vision, image compression). In some examples, the additional processing component may be incorporated into the device 200. In other examples, the additional processing component may be incorporated into a remote computing device in communication with the device 200. In another example, the first processed digital image 224, the second processed digital image 228, and the third processed digital image 232 may be output to an internal or external display device for visual presentation.

The adaptive digital image enhancement techniques of the present disclosure can be performed repeatedly on a series of raw digital images of a video stream that is output from the camera 202. The adaptive digital image enhancement techniques of the present disclosure can be performed repeatedly according to any suitable frequency. In some examples, the adaptive digital image enhancement techniques of the present disclosure are performed on a frame-by-frame basis (e.g., on each raw digital image of the video. In other examples, the adaptive digital image enhancement techniques of the present disclosure are performed less frequently (e.g., every five frames, every ten frames).

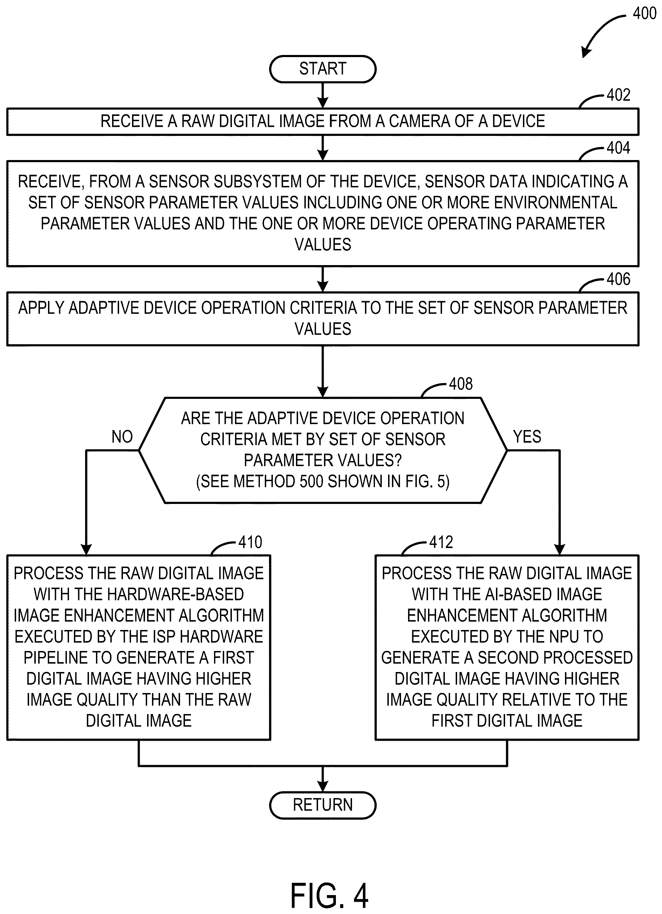

FIGS. 4-7 show example methods 400, 500, 600, and 700 for controlling a device to perform the adaptive digital image enhancement techniques of the present disclosure. For example, the methods 400, 500, 600, and 700 may be performed by the laptop computer 100 shown in FIG. 1A, the smartphone 106 shown in FIG. 1B, the HMD 116 shown in FIG. 1C, and the device 200 shown in in FIG. 2.

In FIG. 4, at 402, the method 400 includes receiving a raw digital image from a camera of the device.

At 404, the method 400 includes receiving, from a sensor subsystem of the device, sensor data indicating a set of sensor parameter values. The set of sensor parameter values includes one or more environmental parameter values and the one or more device operating parameter values.

At 406 and 408, the method 400 includes applying adaptive device operation criteria to the set of sensor parameter values to determine whether to use an AI-based image enhancement algorithm or a hardware-based image enhancement algorithm to process the raw digital image in order for the device to have overall improved performance.

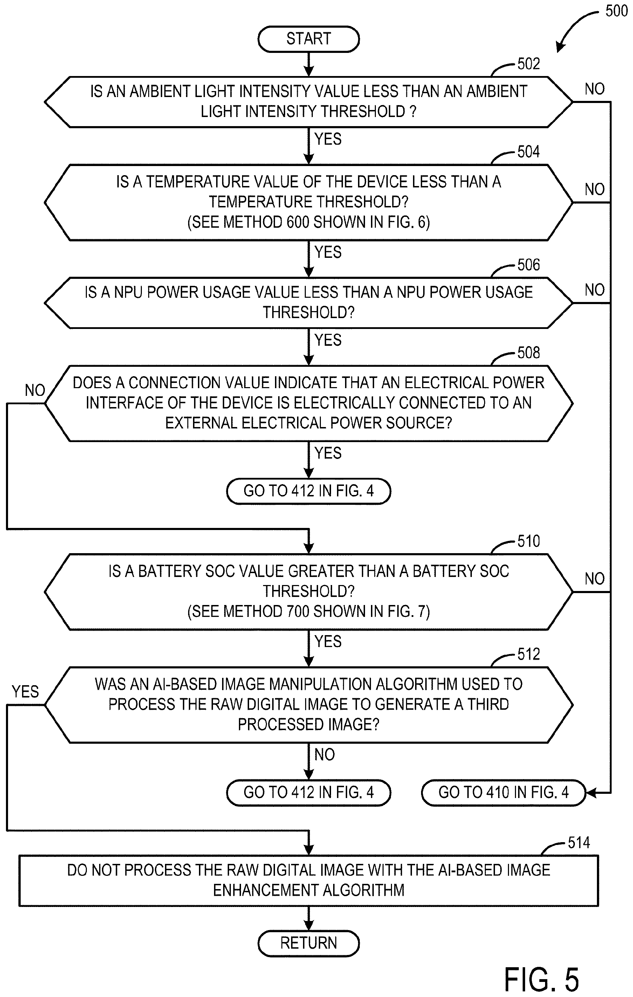

FIG. 5 shows a method 500 for applying the adaptive device operation criteria to the set of sensor parameter values. The method 500 may be performed as part of performing the method 400 shown in FIG. 4.

In FIG. 5, at 502, the method 500 includes determining if an ambient light intensity value output by an ambient light sensor of the device is less than an ambient light intensity threshold. If the ambient light intensity value is less than the ambient light intensity threshold, then the method 500 moves to 504. Otherwise, the method moves to 410 in FIG. 4.

At 504, the method 500 includes determining if a temperature value output by a temperature sensor of the device is less than a threshold temperature. If the temperature value of the device is less than the temperature threshold, then the method 500 moves to 506. Otherwise, the method moves to 410 in FIG. 4.

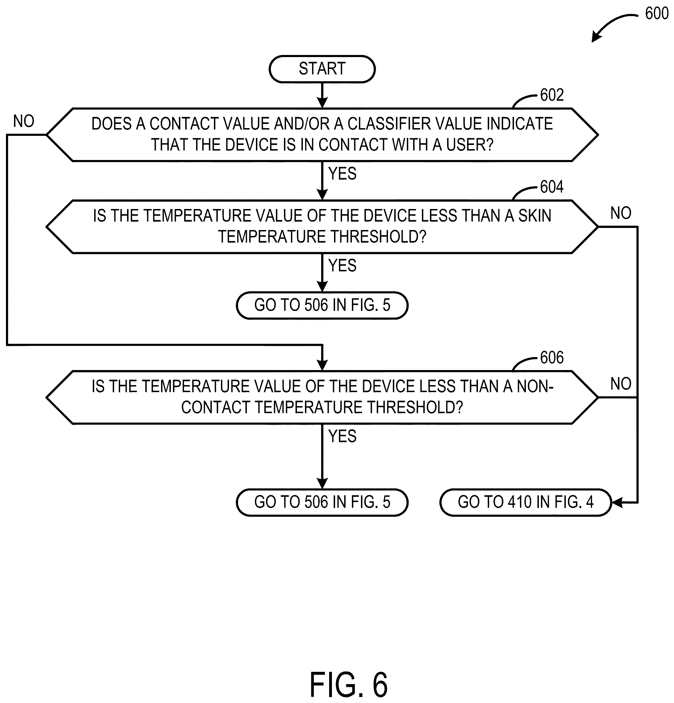

In some implementations, the adaptive device operation criteria may include multiple temperature thresholds, and the method 600 shown in FIG. 6 may be performed as part of performing the method 500 shown in FIG. 5.

In FIG. 6, at 602, the method 600 includes determining if a contact value of a contact sensor of the device and/or a classifier value output by an image classifier indicates that the device is in contact with a user. If it is determined that the device is in contact with the user based on the contact value and/or the classifier value, then the method 600 moves to 604. Otherwise, the method 600 moves to 606.

At 604, it has been determined that the device is in contact with the user, and the method 600 includes determining if the temperature value of the device is less than a skin temperature threshold. If the temperature value of the device is less than the skin temperature threshold, then the method 600 goes to 506 in FIG. 5. Otherwise, the method 600 goes to 410 in FIG. 4.

At 606, it has been determined that the device is not in contact with the user, and the method 600 includes determining if the temperature value of the device is less than a non-contact temperature threshold that is greater than the skin temperature threshold. If the temperature value of the device is less than the non-contact temperature threshold, then the method 600 goes to 506 in FIG. 5. Otherwise, the method 600 goes to 410 in FIG. 4.

Returning to FIG. 5, at 506, the method 500 includes determining if an NPU power usage value is less than an NPU power usage threshold. If the NPU power usage value is less than an NPU power usage threshold, then the method 500 moves to 508. Otherwise, the method 500 goes to 410 in FIG. 4.

At 508, the method 500 includes determining if a connection value indicates that an electrical power interface of the device is electrically connected to an external electrical power source. If the connection value indicates that the electrical power interface of the device is electrically connected to the external electrical power source, then the method 500 goes to 412 in FIG. 4. Otherwise, the method 500 moves to 510.

At 510, the method 500 includes determining if a battery SOC value is greater than a battery SOC threshold. If the battery SOC value is greater than the battery SOC threshold, then the method 500 moves to 512. Otherwise, the method 500 goes to 410 in FIG. 4.

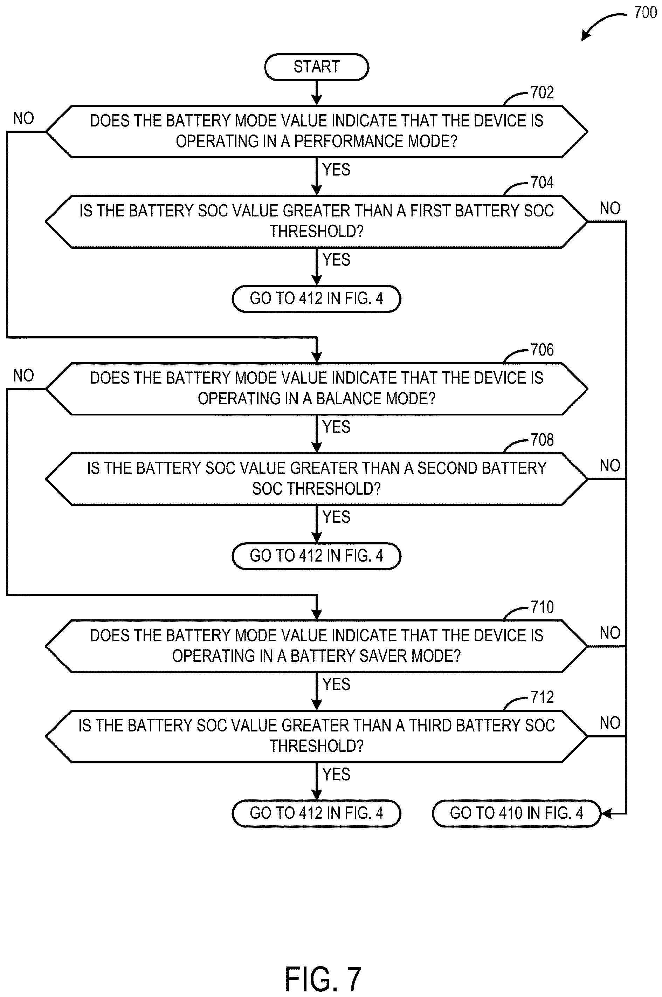

In some implementations, the adaptive device operation criteria may include multiple battery SOC thresholds, and the device may operate in different electrical power consumption modes. In such implementations, the method 700 shown in FIG. 7 may be performed as part of performing the method 500 shown in FIG. 5.

In FIG. 7, at 702, the method 700 includes determining if a battery mode value output by a battery mode sensor of the device indicates that the device is operating in a performance mode. If the device is operating in the performance mode, then the method 700 moves to 704. Otherwise, the method 700 moves to 706.

At 704, the method 700 includes determining if the battery SOC value is greater than a first battery SOC threshold. If the battery SOC value is greater than the first battery SOC threshold, then the method 700 goes to 412 in FIG. 4. Otherwise, the method 700 goes to 410 in FIG. 4.

At 706, the method 700 includes determining if the battery mode value indicates that the device is operating in a balance mode. If the device is operating in the balance mode, then the method 700 moves to 708. Otherwise, the method 700 moves to 710.

At 708, the method 700 includes determining if the battery SOC value is greater than a second battery SOC threshold that is greater than the first battery SOC threshold. If the battery SOC value is greater than the second battery SOC threshold, then the method 700 goes to 412 in FIG. 4. Otherwise, the method 700 goes to 410 in FIG. 4.

At 710, the method 700 includes determining if the battery mode value indicates that the device is operating in a battery saver mode. If the device is operating in the battery saver mode, then the method 700 moves to 712. Otherwise, the method goes to 410 in FIG. 4.

At 712, the method 700 includes determining if the battery SOC value is greater than a third battery SOC threshold that is greater than the second battery SOC threshold. If the battery SOC value is greater than the third battery SOC threshold, then the method 700 goes to 412 in FIG. 4. Otherwise, the method 700 goes to 410 in FIG. 4.

Returning to FIG. 5, at 512, the method 500 includes determining if an AI-based manipulation algorithm was used to process the raw digital image to generate a third processed image. If the AI-based manipulation algorithm was used to process the raw digital image to generate a third processed image, then the method 500 moves to 514. Otherwise, the method 500 goes to 412 in FIG. 4.

At 514, it has been determined that the AI-based manipulation algorithm was used to process the raw digital image to generate the third processed image, and the method 500 includes not processing the raw digital image with the AI-based image enhancement algorithm. As discussed above, the AI-based image manipulation algorithm may manipulate the raw digital image in a manner that would make the AI-based image enhancement algorithm less effective or ineffective were it to be used. As such, use of the AI-based image enhancement algorithm in this scenario in order to increase overall efficiency of the device.

Returning to FIG. 4, at 410, it has been determined that the adaptive device operation criteria have not been met, and the method 400 includes processing the raw digital image with a hardware-based image enhancement algorithm executed by an (ISP) hardware pipeline of the device to generate a first processed digital image having higher image quality than the raw digital image.

At 412, it has been determined that the adaptive device operation criteria have been met, and the method 400 includes processing the raw digital image with an AI-based image enhancement algorithm executed by a NPU of the device to generate a second processed digital image having higher image quality than the first processed digital image.

The methods 400, 500, 600, and 700 shown in FIGS. 4-7 may be performed repeatedly by the device to process different raw digital images output by the camera of the device. In some implementations, the methods 400, 500, 600, and 700 shown in FIGS. 4-7 may be performed repeatedly for a series of raw digital images of a video stream.

The methods 400, 500, 600, and 700 shown in FIGS. 4-7 may be performed to determine whether environmental conditions and operating conditions of the device are suitable to use the AI-based image enhancement algorithm to process the raw digital image or are suitable to use the hardware-based image enhancement algorithm in order for the device to have the best overall performance. By only using the AI-based image enhancement algorithm to process the raw digital image, when the environmental conditions and the operating conditions of the device are suitable, the image quality of the processed image, the memory, and power consumption of the device are directly impacted to improve the overall performance.

The methods and processes described herein may be tied to a computing system of one or more computing devices. In particular, such methods and processes may be implemented as an executable computer-application program, a network-accessible computing service, an application-programming interface (API), a library, or a combination of the above and/or other compute resources.

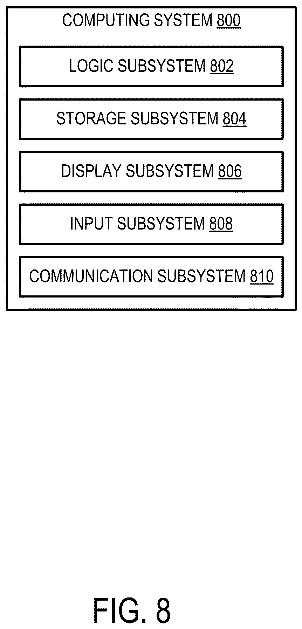

FIG. 8 schematically shows a simplified representation of a computing system 800 configured to provide any to all of the compute functionality described herein. Computing system 800 may take the form of one or more personal computers, network-accessible server computers, tablet computers, home-entertainment computers, gaming devices, mobile computing devices, mobile communication devices (e.g., smartphone), virtual/augmented/mixed reality computing devices, wearable computing devices, Internet of Things (IoT) devices, embedded computing devices, and/or other computing devices. For example, the computing system 800 may correspond to the laptop computer 100 shown in FIG. 1A, the smartphone 106 shown in FIG. 1B, the HMD 116 shown in FIG. 1C, and the device 200 shown in in FIG. 2.

Computing system 800 includes a logic subsystem 802 and a storage subsystem 804. Computing system 800 may optionally include a display subsystem 806, input subsystem 808, communication subsystem 810, and/or other subsystems not shown in FIG. 8.

Logic subsystem 802 includes one or more physical devices configured to execute instructions. For example, the logic subsystem may be configured to execute instructions that are part of one or more applications, services, or other logical constructs. The logic subsystem may include one or more hardware processors configured to execute software instructions. Additionally, or alternatively, the logic subsystem may include one or more hardware or firmware devices configured to execute hardware or firmware instructions. Processors of the logic subsystem may be single-core or multi-core, and the instructions executed thereon may be configured for sequential, parallel, and/or distributed processing. Individual components of the logic subsystem optionally may be distributed among two or more separate devices, which may be remotely located and/or configured for coordinated processing. Aspects of the logic subsystem may be virtualized and executed by remotely-accessible, networked computing devices configured in a cloud-computing configuration.

Storage subsystem 804 includes one or more physical devices configured to temporarily and/or permanently hold computer information such as data and instructions executable by the logic subsystem. When the storage subsystem includes two or more devices, the devices may be collocated and/or remotely located. Storage subsystem 804 may include volatile, nonvolatile, dynamic, static, read/write, read-only, random-access, sequential-access, location-addressable, file-addressable, and/or content-addressable devices. Storage subsystem 804 may include removable and/or built-in devices. When the logic subsystem executes instructions, the state of storage subsystem 804 may be transformed - e.g., to hold different data.

Aspects of logic subsystem 802 and storage subsystem 804 may be integrated together into one or more hardware-logic components. Such hardware-logic components may include program- and application-specific integrated circuits (PASIC / ASICs), program- and application-specific standard products (PSSP / ASSPs), system-on-a-chip (SOC), and complex programmable logic devices (CPLDs), for example.

The logic subsystem 802 and the storage subsystem 804 may cooperate to instantiate one or more logic machines. As used herein, the term "machine" is used to collectively refer to the combination of hardware, firmware, software, instructions, and/or any other components cooperating to provide computer functionality. In other words, "machines" are never abstract ideas and always have a tangible form. A machine may be instantiated by a single computing device, or a machine may include two or more sub-components instantiated by two or more different computing devices. In some implementations a machine includes a local component (e.g., software application executed by a computer processor) cooperating with a remote component (e.g., cloud computing service provided by a network of server computers). The software and/or other instructions that give a particular machine its functionality may optionally be saved as one or more unexecuted modules on one or more suitable storage devices.

Machines may be implemented using any suitable combination of state-of-the-art and/or future machine learning (ML), artificial intelligence (AI), and/or natural language processing (NLP) techniques. Non-limiting examples of techniques that may be incorporated in an implementation of one or more machines include support vector machines, multi-layer neural networks, convolutional neural networks (e.g., including spatial convolutional networks for processing images and/or videos, temporal convolutional neural networks for processing audio signals and/or natural language sentences, and/or any other suitable convolutional neural networks configured to convolve and pool features across one or more temporal and/or spatial dimensions), recurrent neural networks (e.g., long short-term memory networks), associative memories (e.g., lookup tables, hash tables, Bloom Filters, Neural Turing Machine and/or Neural Random Access Memory), word embedding models (e.g., GloVe or Word2Vec), unsupervised spatial and/or clustering methods (e.g., nearest neighbor algorithms, topological data analysis, and/or k-means clustering), graphical models (e.g., (hidden) Markov models, Markov random fields, (hidden) conditional random fields, and/or AI knowledge bases), and/or natural language processing techniques (e.g., tokenization, stemming, constituency and/or dependency parsing, and/or intent recognition, segmental models, and/or super-segmental models (e.g., hidden dynamic models)).

In some examples, the methods and processes described herein may be implemented using one or more differentiable functions, wherein a gradient of the differentiable functions may be calculated and/or estimated with regard to inputs and/or outputs of the differentiable functions (e.g., with regard to training data, and/or with regard to an objective function). Such methods and processes may be at least partially determined by a set of trainable parameters. Accordingly, the trainable parameters for a particular method or process may be adjusted through any suitable training procedure, in order to continually improve functioning of the method or process.

Non-limiting examples of training procedures for adjusting trainable parameters include supervised training (e.g., using gradient descent or any other suitable optimization method), zero-shot, few-shot, unsupervised learning methods (e.g., classification based on classes derived from unsupervised clustering methods), reinforcement learning (e.g., deep Q learning based on feedback) and/or generative adversarial neural network training methods, belief propagation, RANSAC (random sample consensus), contextual bandit methods, maximum likelihood methods, and/or expectation maximization. In some examples, a plurality of methods, processes, and/or components of systems described herein may be trained simultaneously with regard to an objective function measuring performance of collective functioning of the plurality of components (e.g., with regard to reinforcement feedback and/or with regard to labelled training data). Simultaneously training the plurality of methods, processes, and/or components may improve such collective functioning. In some examples, one or more methods, processes, and/or components may be trained independently of other components (e.g., offline training on historical data).

When included, display subsystem 806 may be used to present a visual representation of data held by storage subsystem 804. This visual representation may take the form of a graphical user interface (GUI). Display subsystem 806 may include one or more display devices utilizing virtually any type of technology. In some implementations, display subsystem may include one or more virtual-, augmented-, or mixed reality displays.

When included, input subsystem 808 may comprise or interface with one or more input devices. An input device may include a sensor device or a user input device. Examples of user input devices include a keyboard, mouse, touch screen, or game controller. In some embodiments, the input subsystem may comprise or interface with selected natural user input (NUI) componentry. Such componentry may be integrated or peripheral, and the transduction and/or processing of input actions may be handled on- or off-board. Example NUI componentry may include a microphone for speech and/or voice recognition; an infrared, color, stereoscopic, and/or depth camera for machine vision and/or gesture recognition; a head tracker, eye tracker, accelerometer, and/or gyroscope for motion detection and/or intent recognition.

When included, communication subsystem 810 may be configured to communicatively couple computing system 800 with one or more other computing devices. Communication subsystem 810 may include wired and/or wireless communication devices compatible with one or more different communication protocols. The communication subsystem may be configured for communication via personal-, local- and/or wide-area networks.

In an example, a device comprises a camera configured to output a raw digital image, a sensor subsystem including a plurality of sensors configured to output sensor data indicating a set of sensor parameter values. The plurality of sensors includes one or more environmental sensors configured to output one or more environmental parameter values. The plurality of sensors includes one or more device sensors configured to output one or more device operating parameter values. The set of sensor parameter values includes the one or more environmental parameter values and the one or more device operating parameter values. The device further comprises a logic subsystem including an image signal processing (ISP) hardware pipeline configured to execute a hardware-based image enhancement algorithm and a neural processing unit (NPU) configured to execute an artificial intelligence (AI)-based image enhancement algorithm and a storage subsystem holding instructions executable by the logic subsystem to receive the raw digital image from the camera, receive, from the sensor subsystem, the sensor data indicating the set of sensor parameter values, based at least on the set of sensor parameter values not meeting adaptive device operation criteria, process the raw digital image with the hardware-based image enhancement algorithm executed by the ISP hardware pipeline to generate a first processed digital image having higher image quality than the raw digital image, and based at least on the set of sensor parameter values meeting the adaptive device operation criteria, process the raw digital image with the AI-based image enhancement algorithm executed by the NPU to generate a second processed digital image having higher image quality relative to the first digital image. In this example and/or other examples, the one or more environmental sensors may include an ambient light sensor configured to output an ambient light intensity value, the adaptive device operation criteria may include an ambient light intensity threshold, and the adaptive device operation criteria may not be met based at least on the ambient light intensity value being greater than the ambient light intensity threshold. In this example and/or other examples, the one or more device sensors may include a temperature sensor configured to output a temperature value of the device, the adaptive device operation criteria may include a temperature threshold, and the adaptive device operation criteria may not be met based at least on the temperature value being greater than the temperature threshold. In this example and/or other examples, the temperature threshold may be a skin temperature threshold above which the temperature value of the device causes discomfort to skin of a user that comes in contact with the device. In this example and/or other examples, the adaptive device operation criteria may include a non-contact temperature threshold that is greater than the skin temperature threshold, and the storage subsystem holds may instruction executable by the logic subsystem to determine whether the device is in contact with the user based at least on at least one of 1) performing image analysis on the raw digital image, or 2) a contact value output by a contact sensor of the sensor subsystem, the adaptive device operation criteria may not be met based at least on the device being in contact with the user and the temperature value of the device being greater than the skin temperature threshold, the adaptive device operation criteria may not be met based at least on the device being not in contact with the user and the temperature value of the device being greater than the non-contact temperature threshold. In this example and/or other examples, the one or more device sensors may include a NPU power usage sensor configured to output a NPU power usage value, the adaptive device operation criteria may include a NPU power usage threshold, and the adaptive device operation criteria may not be met based at least on the NPU power usage value being greater than the NPU power usage threshold. In this example and/or other examples, the device may further comprise a battery configured to provide electrical power to the device, and an electrical power interface configured to electrically connect the device to an external power source that is configured to provide electrical power to the device, the one or more device sensors may include a connection sensor configured to output a connection value indicating whether the device is connected to the external power source via the electrical power interface, the one or more device sensors may include a battery state of charge sensor configured to output a battery state of charge value, the adaptive device operation criteria may include a battery state of charge threshold, and the adaptive device operation criteria may not be met based at least on the connection value indicating that the device is not electrically connected to the external power source via the electrical power interface and the battery state of charge value being less than the battery state of charge threshold. In this example and/or other examples, the device may be configured to operate in different electrical power consumption modes including a performance mode, a balance mode, and a battery saver mode, the adaptive device operation criteria may not be met based at least on the device operating in the performance mode and the battery state of charge value being less than a first battery state of charge threshold, the adaptive device operation criteria may not be met based at least on the device operating in the balance mode and the battery state of charge value being less than a second battery state of charge threshold that is greater than the first battery state of charge threshold, and the adaptive device operation criteria may not be met based at least on the device operating in the battery saver mode and the battery state of charge value being less than a third battery state of charge threshold that is greater than the second battery state of charge threshold. In this example and/or other examples, the storage subsystem may hold instructions executable by the logic subsystem to process the raw digital image with an AI-based image manipulation algorithm executed by the NPU to generate a third processed digital image, and the AI-based image enhancement algorithm may not be used to process the raw digital image based at least on the raw digital image being processed with the AI-based image manipulation algorithm to generate the third processed digital image. In this example and/or other examples, the one or more environmental sensors may include an ambient light sensor configured to output an ambient light intensity value, the one or more device sensors may include a temperature sensor configured to output a temperature value of the device, a NPU power usage sensor configured to output a NPU power usage value, and a battery state of charge sensor configured to output a battery state of charge value of a battery of the device, the adaptive device operation criteria may include an ambient light intensity threshold, a temperature threshold, an NPU power usage threshold, and a battery state of charge threshold, the adaptive device operation criteria may be met based at least on the ambient light intensity value being less than the ambient light intensity threshold, the temperature value being less than the temperature threshold, the NPU power usage value being less than the NPU power usage threshold, and the battery state of charge value being greater than the battery state of charge threshold.

In another example, a method for controlling a device comprises receiving a raw digital image from a camera of the device, receiving, from a sensor subsystem of the device, sensor data indicating a set of sensor parameter values, wherein the plurality of sensors includes one or more environmental sensors configured to output one or more environmental parameter values, wherein the plurality of sensors includes one or more device sensors configured to output one or more device operating parameter values, and wherein the set of sensor parameter values includes the one or more environmental parameter values and the one or more device operating parameter values, based at least on the set of sensor parameter values not meeting adaptive device operation criteria, processing the raw digital image with a hardware-based image enhancement algorithm executed by an image signal processing (ISP) hardware pipeline of the device to generate a first processed digital image having higher image quality than the raw digital image, and based at least on the set of sensor parameter values meeting adaptive device operation criteria, processing the raw digital image with an artificial intelligence (AI)-based image enhancement algorithm executed by a neural processing unit (NPU) of the device to generate a second processed digital image having higher image quality than the first processed digital image. In this example and/or other examples, the one or more environmental sensors may include an ambient light sensor configured to output an ambient light intensity value, the adaptive device operation criteria may include an ambient light intensity threshold, and the adaptive device operation criteria may not be met based at least on the ambient light intensity value being greater than the ambient light intensity threshold. In this example and/or other examples, the one or more device sensors may include a temperature sensor configured to output a temperature value of the device, the adaptive device operation criteria may include a temperature threshold, and the adaptive device operation criteria may not be met based at least on the temperature value being greater than the temperature threshold. In this example and/or other examples, the temperature threshold may be a skin temperature threshold above which the temperature value of the device is determined to cause discomfort to skin of a user that comes in contact with the device. In this example and/or other examples, the adaptive device operation criteria may include a non-contact temperature threshold that is greater than the skin temperature threshold, and the method may further comprise determining whether the device is in contact with the user based at least on at least one of 1) performing image analysis on the raw digital image, or 2) a skin contact value output by a contact sensor of the sensor subsystem, the adaptive device operation criteria may not be not met based at least on the device being in contact with the user and the temperature value of the device being greater than the skin temperature threshold, and the adaptive device operation criteria may not be met based at least on the device being not in contact with the user and the temperature value of the device being greater than the non-contact temperature threshold. In this example and/or other examples, the one or more device sensors may include a NPU power usage sensor configured to output a NPU power usage value, the adaptive device operation criteria may include a NPU power usage threshold, and the adaptive device operation criteria may not be met based at least on the NPU power usage value being greater than the NPU power usage threshold. In this example and/or other examples, the one or more device sensors may include a connection sensor configured to output a connection value indicating whether the device is connected to an external power source via an electrical power interface of the device, the one or more device sensors may include a battery state of charge sensor configured to output a battery state of charge value of a battery of the device, the adaptive device operation criteria may include a battery state of charge threshold, and the adaptive device operation criteria may not be met based at least on the connection value indicating that the device is not electrically connected to the external power source via the electrical power interface and the battery state of charge value being less than a battery state of charge threshold. In this example and/or other examples, the device may be configured to operate in different electrical power consumption modes including a performance mode, a balance mode, and a battery saver mode, the adaptive device operation criteria may not be met based at least on the device operating in the performance mode and the battery state of charge value being less than a first battery state of charge threshold, the adaptive device operation criteria may not be met based at least on the device operating in the balance mode and the battery state of charge value being less than a second battery state of charge threshold that is greater than the first battery state of charge threshold, and the adaptive device operation criteria may not be met based at least on the device operating in the battery saver mode and the battery state of charge value being less than a third battery state of charge threshold that is greater than the second battery state of charge threshold. In this example and/or other examples, the method may further comprise processing the raw digital image with an AI-based image manipulation algorithm executed by the NPU to generate a third processed digital image, and the AI-based image enhancement algorithm may not be used to process the raw digital image based at least on the raw digital image being processed with the AI-based image manipulation algorithm to generate the third processed digital image.

In yet another example, a method for controlling a device comprises receiving a raw digital image from a camera of the device, receiving, from a sensor subsystem of the device, sensor data indicating a set of sensor parameter values, wherein the plurality of sensors includes an ambient light sensor configured to output an ambient light intensity value, a temperature sensor configured to output a temperature value of the device, a neural processing unit (NPU) power usage sensor configured to output a NPU power usage value, and a battery state of charge sensor configured to output a battery state of charge value of a battery of the device, and wherein the set of sensor parameter values includes the ambient light intensity value, the NPU power usage value, and the battery state of charge value, based at least on the set of sensor parameter values not meeting adaptive device operation criteria, processing the raw digital image with a hardware-based image enhancement algorithm executed by an image signal processing (ISP) hardware pipeline of the device to generate a first processed digital image having higher image quality than the raw digital image, wherein the adaptive device operation criteria includes an ambient light intensity threshold, a temperature threshold, a NPU power usage threshold, and a battery state of charge threshold, wherein the adaptive device operation criteria are not met based at least on any of (i) the ambient light intensity value being greater than the ambient light intensity threshold, (ii) the temperature value being greater than the temperature threshold, (iii) the NPU power usage value being greater than the NPU power usage threshold, and (iv) the battery state of charge value being less than the battery state of charge threshold, and based at least on the set of sensor parameter values meeting the adaptive device operation criteria, processing the raw digital image with an artificial intelligence (AI)-based image enhancement algorithm executed by a NPU of the device to generate a second processed digital image having higher image quality than the first processed digital image, wherein the adaptive device operation criteria are met based at least on (i) the ambient light intensity value being less than the ambient light intensity threshold, (ii) the temperature value being less than the temperature threshold, (iii) the NPU power usage value being less than the NPU power usage threshold, and (iv) the battery state of charge value being greater than the battery state of charge threshold.

Examples are disclosed that relate to controlling a device to enhance a digital image by selectively using different digital image enhancement algorithms based on adaptive device operation criteria that improves overall performance of the device. In one example, a digital image is received from a camera. Sensor data indicating a set of sensor parameter values is received from a sensor subsystem. The digital image is processed with a hardware-based image enhancement algorithm to generate a first processed digital image having higher image quality than the digital image based on the set of sensor parameter values not meeting adaptive device operation criteria. The digital image is processed with an artificial intelligence (AI)-based image enhancement algorithm to generate a second processed digital image having higher image quality than the first processed digital image based on the set of sensor parameter values meeting the adaptive device operation criteria.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The subject matter of the present disclosure includes all novel and non-obvious combinations and sub-combinations of the various processes, systems and configurations, and other features, functions, acts, and/or properties disclosed herein, as well as any and all equivalents thereof.

## Claims

1. A device (200) comprising:
a camera (202) configured to output a raw digital image (204);
a sensor subsystem (206) including a plurality of sensors (208) configured to output sensor data (210) indicating a set of sensor parameter values (212), wherein the plurality of sensors (208) includes one or more environmental sensors (300) configured to output one or more environmental parameter values (304), wherein the plurality of sensors (208) includes one or more device sensors (302) configured to output one or more device operating parameter values (306), and wherein the set of sensor parameter values (212) includes the one or more environmental parameter values (304) and the one or more device operating parameter values (306);
a logic subsystem (214) including an image signal processing, ISP, hardware pipeline (218) configured to execute a hardware-based image enhancement algorithm (222) and a neural processing unit, NPU, (220) configured to execute an artificial intelligence, AI,-based image enhancement algorithm (226);
a storage subsystem (216) holding instructions executable by the logic subsystem (214) to:
receive the raw digital image (204) from the camera (202);
receive, from the sensor subsystem (206), the sensor data (210) indicating the set of sensor parameter values (212);
based at least on the set of sensor parameter values (212) not meeting adaptive device operation criteria (236), process the raw digital image (204) with the hardware-based image enhancement algorithm (222) executed by the ISP hardware pipeline (226) to generate a first processed digital image (224) having higher image quality than the raw digital image (204); and
based at least on the set of sensor parameter values (212) meeting the adaptive device operation criteria (236), process the raw digital image (206) with the AI-based image enhancement algorithm (226) executed by the NPU (220) to generate a second processed digital image (228) having higher image quality relative to the first digital image (224).

2. The device of claim 1,
wherein the one or more environmental sensors includes an ambient light sensor configured to output an ambient light intensity value;
wherein the adaptive device operation criteria include an ambient light intensity threshold; and
wherein the adaptive device operation criteria are not met based at least on the ambient light intensity value being greater than the ambient light intensity threshold.

3. The device of claim 1 or claim 2,
wherein the one or more device sensors includes a temperature sensor configured to output a temperature value of the device;
wherein the adaptive device operation criteria include a temperature threshold; and
wherein the adaptive device operation criteria are not met based at least on the temperature value being greater than the temperature threshold.

4. The device of claim 3, wherein the temperature threshold is a skin temperature threshold above which the temperature value of the device causes discomfort to skin of a user that comes in contact with the device.

5. The device of claim 4, wherein the adaptive device operation criteria include a non-contact temperature threshold that is greater than the skin temperature threshold, and wherein the storage subsystem holds instructions executable by the logic subsystem to:
determine whether the device is in contact with the user based at least on at least one of 1) performing image analysis on the raw digital image, or 2) a contact value output by a contact sensor of the sensor subsystem;
wherein the adaptive device operation criteria are not met based at least on the device being in contact with the user and the temperature value of the device being greater than the skin temperature threshold; and
wherein the adaptive device operation criteria are not met based at least on the device being not in contact with the user and the temperature value of the device being greater than the non-contact temperature threshold.

6. The device of any previous claim,
wherein the one or more device sensors includes a NPU power usage sensor configured to output a NPU power usage value;
wherein the adaptive device operation criteria include a NPU power usage threshold; and
wherein the adaptive device operation criteria are not met based at least on the NPU power usage value being greater than the NPU power usage threshold.

7. The device of any previous claim, further comprising:
a battery configured to provide electrical power to the device; and
an electrical power interface configured to electrically connect the device to an external power source that is configured to provide electrical power to the device;
wherein the one or more device sensors includes a connection sensor configured to output a connection value indicating whether the device is connected to the external power source via the electrical power interface;
wherein the one or more device sensors includes a battery state of charge sensor configured to output a battery state of charge value;
wherein the adaptive device operation criteria include a battery state of charge threshold; and
wherein the adaptive device operation criteria are not met based at least on the connection value indicating that the device is not electrically connected to the external power source via the electrical power interface and the battery state of charge value being less than the battery state of charge threshold.

8. The device of claim 7,
wherein the device is configured to operate in different electrical power consumption modes including a performance mode, a balance mode, and a battery saver mode;
wherein the adaptive device operation criteria are not met based at least on the device operating in the performance mode and the battery state of charge value being less than a first battery state of charge threshold;
wherein the adaptive device operation criteria are not met based at least on the device operating in the balance mode and the battery state of charge value being less than a second battery state of charge threshold that is greater than the first battery state of charge threshold; and
wherein the adaptive device operation criteria are not met based at least on the device operating in the battery saver mode and the battery state of charge value being less than a third battery state of charge threshold that is greater than the second battery state of charge threshold.

9. The device of any previous claim, wherein the storage subsystem holds instructions executable by the logic subsystem to:
process the raw digital image with an AI-based image manipulation algorithm executed by the NPU to generate a third processed digital image; and
wherein the AI-based image enhancement algorithm is not used to process the raw digital image based at least on the raw digital image being processed with the AI-based image manipulation algorithm to generate the third processed digital image.

10. The device of any previous claim,
wherein the one or more environmental sensors includes an ambient light sensor configured to output an ambient light intensity value;
wherein the one or more device sensors includes a temperature sensor configured to output a temperature value of the device, a NPU power usage sensor configured to output a NPU power usage value, and a battery state of charge sensor configured to output a battery state of charge value of a battery of the device;
wherein the adaptive device operation criteria include an ambient light intensity threshold, a temperature threshold, an NPU power usage threshold, and a battery state of charge threshold;
wherein the adaptive device operation criteria are met based at least on the ambient light intensity value being less than the ambient light intensity threshold, the temperature value being less than the temperature threshold, the NPU power usage value being less than the NPU power usage threshold, and the battery state of charge value being greater than the battery state of charge threshold.

11. A method (400) for controlling a device, the method comprising:
receiving (402) a raw digital image from a camera of the device;
receiving (404), from a sensor subsystem of the device, sensor data indicating a set of sensor parameter values, wherein the plurality of sensors includes one or more environmental sensors configured to output one or more environmental parameter values, wherein the plurality of sensors includes one or more device sensors configured to output one or more device operating parameter values, and wherein the set of sensor parameter values includes the one or more environmental parameter values and the one or more device operating parameter values;
based at least on the set of sensor parameter values not meeting adaptive device operation criteria, processing (410) the raw digital image with a hardware-based image enhancement algorithm executed by an image signal processing, ISP, hardware pipeline of the device to generate a first processed digital image having higher image quality than the raw digital image; and
based at least on the set of sensor parameter values meeting adaptive device operation criteria, processing (412) the raw digital image with an artificial intelligence, AI,-based image enhancement algorithm executed by a neural processing unit, NPU, of the device to generate a second processed digital image having higher image quality than the first processed digital image.

12. The method of claim 11,
wherein the one or more environmental sensors includes an ambient light sensor configured to output an ambient light intensity value;
wherein the adaptive device operation criteria include an ambient light intensity threshold; and
wherein the adaptive device operation criteria are not met based at least on the ambient light intensity value being greater than the ambient light intensity threshold.

13. The method of claim 11 or claim 12,
wherein the one or more device sensors includes a temperature sensor configured to output a temperature value of the device;
wherein the adaptive device operation criteria include a temperature threshold; and
wherein the adaptive device operation criteria are not met based at least on the temperature value being greater than the temperature threshold.

14. The method of any one of claims 11 to 13,
wherein the one or more device sensors includes a NPU power usage sensor configured to output a NPU power usage value;
wherein the adaptive device operation criteria include a NPU power usage threshold; and
wherein the adaptive device operation criteria are not met based at least on the NPU power usage value being greater than the NPU power usage threshold.

15. A method (400) for controlling a device, the method comprising:
receiving (402) a raw digital image from a camera of the device;
receiving (404), from a sensor subsystem of the device, sensor data indicating a set of sensor parameter values, wherein the plurality of sensors includes an ambient light sensor configured to output an ambient light intensity value, a temperature sensor configured to output a temperature value of the device, a neural processing unit, NPU, power usage sensor configured to output a NPU power usage value, and a battery state of charge sensor configured to output a battery state of charge value of a battery of the device, and wherein the set of sensor parameter values includes the ambient light intensity value, the NPU power usage value, and the battery state of charge value;
based at least on the set of sensor parameter values not meeting adaptive device operation criteria, processing (410) the raw digital image with a hardware-based image enhancement algorithm executed by an image signal processing, ISP hardware pipeline of the device to generate a first processed digital image having higher image quality than the raw digital image, wherein the adaptive device operation criteria includes an ambient light intensity threshold, a temperature threshold, a NPU power usage threshold, and a battery state of charge threshold, wherein the adaptive device operation criteria are not met based at least on any of (i) the ambient light intensity value being greater than the ambient light intensity threshold, (ii) the temperature value being greater than the temperature threshold, (iii) the NPU power usage value being greater than the NPU power usage threshold, and (iv) the battery state of charge value being less than the battery state of charge threshold; and
based at least on the set of sensor parameter values meeting the adaptive device operation criteria, processing (412) the raw digital image with an artificial intelligence, AI,-based image enhancement algorithm executed by a NPU of the device to generate a second processed digital image having higher image quality than the first processed digital image, wherein the adaptive device operation criteria are met based at least on (i) the ambient light intensity value being less than the ambient light intensity threshold, (ii) the temperature value being less than the temperature threshold, (iii) the NPU power usage value being less than the NPU power usage threshold, and (iv) the battery state of charge value being greater than the battery state of charge threshold.
